# EUROPÄISCHE PATENTSCHRIFT

(11) **EP 2 406 121 B1**
(45) Veröffentlichungstag und Bekanntmachung des Hinweises auf die Patenterteilung: **22.04.2015**
(21) Anmeldenummer: 10715668.9
(22) Anmeldetag: 11.03.2010
(51) Int. Cl.: B62D 7/20, B62D 17/00, B60G 7/00, B25B 13/02, B25B 13/48, B25B 13/50

(54) **SPURSTANGE FÜR KRAFTFAHRZEUGE**
TIE ROD FOR MOTOR VEHICLES
BARRE D'ACCOUPLEMENT POUR VEHICULES AUTOMOBILES

(30) Priorität: 13.03.2009 DE 102009001535
(43) Veröffentlichungstag der Anmeldung: 18.01.2012
(73) Patentinhaber: ZF Friedrichshafen AG, 88038 Friedrichshafen (DE)
(72) Erfinder: RUMP, Stefan, 49453 Rehden (DE); ROSENGARTEN, Andreas, 49186 Bad Iburg (DE); SOKOLIHS, Dirk, 49565 Bramsche (DE)
(86) Internationale Anmeldenummer: PCT/DE2010/050009
(87) Internationale Veröffentlichungsnummer: WO 2010/102617

(56) Entgegenhaltungen:
- WO-A2-2008/027476
- DE-A1- 19 900 264
- GB-A- 1 146 315
- US-A- 4 198 174
- US-A- 6 131 494
- US-B1- 6 902 342

## Beschreibung

Die Erfindung betrifft eine Spurstange nach dem Oberbegriff des Patentanspruches 1.

Aus der DE 199 00 264 A1 ist am Beispiel einer Spurstange für ein Kraftfahrzeug eine Baueinheit mit einem wenigstens einseitig mit einem in einer ersten Drehrichtung gängigen Innengewinde versehenen Rohr beschrieben, wobei in das Rohr endseitig eine Gewindehülse eingeschraubt ist, die über ein korrespondierendes Außengewinde verfügt. In diese Gewindehülse wird ein Schaft eines Kugelgelenkes eingeschraubt. Der Schaft verfügt hierzu über ein zu der ersten Drehrichtung entgegengesetzt gängiges Außengewinde, das mit dem Innengewinde der Gewindehülse korrespondiert. Durch eine Bewegung der Gewindehülse, die hierfür eine aus dem offenen Ende des Rohres hervorstehende Schlüsselfläche zum Ansetzen eines Werkzeuges aufweist, können das Rohr und der Schaft in axialer Richtung relativ zueinander bewegt werden. Dies bedeutet, dass sich mit der Drehung der Gewindehülse das Rohr und der Schaft aufeinander zu- oder voneinander wegbewegen. Bewirkt wird dieser Umstand durch die gegensinnig ausgerichteten Gewindeverläufe. Mit dieser Verstellmöglichkeit kann die Baueinheit eine Längenverstellung erfahren, was insbesondere bei dem in der Druckschrift dargestellten Beispiel einer Spurstange für Kraftfahrzeuge für die Einstellung der Spur des Fahrzeuges von Bedeutung ist. Bei der Lösung nach der DE 199 00 264 A1 stellt es jedoch auch einen Nachteil dar, dass die Gewindehülse aus dem offenen Ende des Rohres herausragt. Zumindest in diesem Abschnitt kann insbesondere beim Einsatz in Kraftfahrzeugen die Gefahr bestehen, dass durch Beschädigungen oder infolge unsachgemäßer Handhabung bei der Längenverstellung der Baueinheit Korrosion an dem freien Ende der Gewindehülse auftritt. Damit besteht grundsätzlich auch die Gefahr, dass sich diese Korrosion auf die angrenzenden Bauteile ausweitet und damit die Baueinheit insgesamt undicht oder möglicherweise dauerhaft unbrauchbar wird.

Die DE 77 32 250 U1 gibt eine verglichen mit der zuvor beschriebenen Spurstange ähnlich aufgebaute Baueinheit an, die ebenfalls eine Verstellung der Gewindehülse über eine hierzu vorhandene Schlüsselfläche ermöglicht, so dass der Schaft und das Rohr sich in Axialrichtung relativ zueinander bewegen können.

Nachteilig ist bei dieser Lösung jedoch, dass sowohl das Rohr, als auch die darin eingeschraubte Gewindehülse jeweils mindestens einen Längsschlitz aufweisen, der insbesondere bei der Verwendung der Baueinheit in einem Kraftfahrzeug Feuchtigkeit beziehungsweise Verunreinigungen in das innere der Baueinheit eindringen lässt. Eine erhöhte Belastung der Gewindebereiche durch die eindringenden Fremdstoffe kann dabei nicht gänzlich ausgeschlossen werden und es besteht hier potenziell die Gefahr eines vorzeitigen Verschleißes beziehungsweise einer vorzeitigen Alterung der Baueinheit und damit zumindest die Gefahr einer Funktionseinschränkung.

Der Erfindung liegt die Aufgabe zugrunde, eine Spurstange für Kraftfahrzeuge, insbesondere für Nutzfahrzeuge, bereitzustellen, die eine konstante und prozesssicher reproduzierbare Klemmverbindung zwischen dem Rohr, dem Schaft und der dazwischen angeordneten Gewindehülse gewährleisten soll.

Die Erfindung löst diese Aufgabenstellung mit den Merkmalen des Patentanspruches 1.

Weitere Ausgestaltungen sind Gegenstand der sich anschließenden Unteransprüche.

Eine Baueinheit mit einem wenigstens einseitig mit einem in einer ersten Drehrichtung gängigen Innengewinde versehen Rohr, in das endseitig eine Gewindehülse eingeschraubt ist, wobei die Gewindehülse ein zu der ersten Drehrichtung entgegengesetzt gängiges Innengewinde mit einem darin eingeschraubten Schaft aufweist, wurde dahingehend weitergebildet, dass die Gewindehülse vollständig in dem Endabschnitt des Rohres aufgenommen ist und die Gewindehülse auf der Öffnungsseite des Rohres eine Kupplungskontur aufweist.

Durch die vollständige Aufnahme der Gewindehülse in dem Endabschnitt des Rohres wird mit einfachen Mitteln eine zuverlässig gegen das Eindringen von Verunreinigungen und damit gegen Korrosion geschützte Baueinheit geschaffen. Über die an der Gewindehülse vorhandene Kupplungskontur ist eine justierbare Längeneinstellung des Rohres in Relation zum Schaft über die Gewindehülse möglich. Zusätzliche Abdichtungsmaßnahmen an der Öffnungsseite des Rohres können an der vorliegenden Baueinheit vorgesehen werden. Dies ist jedoch nicht zwingend erforderlich, da die Gewindehülse ohnehin geschützt in dem Rohr aufgenommen ist.

Falls die Kupplungskontur der Gewindehülse eine Werkzeugsangriffs- oder Werkzeugseingriffsfläche bildet, ist es auf diese einfache Weise möglich, von der Öffnungsseite des Rohres her ein Werkzeug mit der Kupplungskontur der Gewindehülse zu kuppeln und eine Drehung der Gewindehülse innerhalb des Rohres zu vollziehen.

Weiterhin besteht eine vorteilhafte Möglichkeit, die Drehung der Gewindehülse innerhalb der Baueinheit zu realisieren, darin, dass die Kupplungskontur der Gewindehülse eine Kontur zum wechselseitigen, formschlüssigen Ineinandergreifen der Gewindehülse mit einem Adapter ist. Dabei kann sowohl bei der werkzeugabhängigen Lösung, als auch bei einer Ausführung mit einem Adapter eine dauerhafte Befestigung des Werkzeuges und/oder des Adapters an der Baueinheit vorgesehen sein. Es besteht jedoch auch die Möglichkeit, nach der erfolgten Längeneinstellung der Baueinheit den Adapter und/oder das Werkzeug wieder von der Baueinheit zu trennen. In jedem Fall ist es ohne erheblichen Aufwand möglich, die erforderliche oder gewünschte Längeneinstellung der Baueinheit vorzunehmen.

Unter der Vielzahl der möglichen Gestaltungsvarianten der Kupplungskontur der Gewindehülse hat es sich als besonders vorteilhaft herausgestellt, wenn die Gewindehülse als Kupplungskontur zumindest eine schlitzförmige Ausnehmung und/oder wenigstens einen an der Gewindehülse ausgebildeten Zapfen und/oder einen Abschnitt mit einer polygonalen Kontur aufweist. In Abhängigkeit der gewählten Kupplungskontur muss hierzu korrespondierend ein geeigneter Adapter beziehungsweise ein entsprechend verwendbares Werkzeug ausgewählt werden, mit Hilfe dessen die Gewindehülse innerhalb des Rohres verdreht werden kann, um dadurch die gewünschte Längeneinstellung der Baueinheit vorzunehmen.

Eine spezielle Ausführung des Adapters besteht beispielsweise darin, dass dieser gewindeunabhängig zwischen Schaft und Rohr verschiebbar ist. Auf diese Weise kann der Adapter zum Beispiel nur für den Zeitraum an der korrespondierenden Kupplungskontur der Gewindehülse angesetzt werden, in dem die Einstellung der Länge der Baueinheit erfolgt. Durch die gewindeunabhängige Möglichkeit der Verschiebung des Adapters in das Rohr hinein und auch aus dem Rohr heraus, besteht ferner die zuvor bereits erwähnte Möglichkeit, den Adapter gänzlich von der Baueinheit zu trennen. Zudem und von wesentlich größerer Bedeutung für die Ausführbarkeit der Lösung ist jedoch der Umstand, dass der Adapter unabhängig von dem miteinander in Wirkverbindung stehenden Gewinden der Gewindehülse des Rohres und des Schaftes zum Einsatz kommen kann.

Führt man den Gedanken der zuvor beschriebenen Ausgestaltung weiter, so ist der Adapter zwischen Schaft und Rohr beispielsweise dadurch verschiebbar, dass die Außenmaße des Adapters zumindest abschnittsweise geringer sind als der Innendurchmesser des Innengewindes des Rohres und die Innenmaße des Adapters über seine gesamte Länge größer sind als der Außendurchmesser des Außengewindes des Schaftes.
Auf diese spezielle Weise kann der Adapter hin- und hergeschoben werden, ohne dass er hierzu auf die vorhandenen Gewinde angewiesen ist. Stellt man sich also beispielsweise ein im Querschnitt kreisförmiges Ende des Rohres der Baueinheit vor, so würde der Außendurchmesser des Adapters zumindest in einem wesentlichen Abschnitt geringer sein als der Innendurchmesser des Innengewindes des Rohres. Die Begrenzung dieser Bemessung des Adapters auf einen Abschnitt basiert auf dem Umstand, dass der Verstellweg der Baueinheit begrenzbar sein soll. Umgekehrt ist der Innendurchmesser des Adapters größer als der Außendurchmesser des Außengewindes des Schaftes. In diesem Fall muss der Innendurchmesser des Adapters jedoch über die gesamte Länge größer sein, um eine freie, wegunabhängige Verschiebung auf dem Schaft zu ermöglichen.

Entsprechend einem anderen Vorschlag ist auch vorgesehen, den Adapter mit einer auf ein Außengewinde des Rohres aufgeschraubten Hülse fest zu verbinden, wobei die Hülse auf ihrer Außenmantelfläche eine Werkzeugansatzfläche aufweist, um somit den Adapter mittelbar über die Hülse zu bewegen und dadurch die Drehbewegung auf die Gewindehülse zu übertragen. Diese im Aufbau geringfügig aufwändigere Variante lässt sich jedoch sehr einfach handhaben und ist daher von Vorteil.

Nachdem die Baueinheit auf die erforderliche Länge eingestellt wurde, ist es erforderlich, die Bauteile in ihrer Position zueinander zu fixieren. Hierzu bieten sich im Stand der Technik unterschiedliche Lösungsmöglichkeiten an. Eine besonders einfache Ausführungsvariante besteht darin, dass der Adapter beziehungsweise die Bauteilverbindung zwischen Rohr und Schaft mittels einer Kontermutter fixiert wird. Diese Kontermutter kann dabei unmittelbar auf dem Außengewinde des Schaftes aufgeschraubt sein. Die Verwendung einer Kontermutter hat einen weiteren Vorteil. Hiermit kann gleichzeitig eine Dichtungswirkung erreicht werden. Durch das Fixieren der Baueinheit mittels einer Kontermutter wird das offene Ende des Rohres verschlossen, so dass damit in einfacher Weise das Eindringen von Feuchtigkeit und Verunreinigungen verhindert werden kann.

Diese Maßnahmen lassen sich noch um ein Vielfaches steigern, wenn als Kontermutter gemäß einem weitergehenden Vorschlag eine selbst sichernde Kontermutter zum Einsatz kommt. Die Selbstsicherung besteht zumeist aus einem Kunststoffbelag innerhalb des Gewindes der Mutter, so dass durch das Fixieren mittels einer derartigen Kontermutter eine zusätzliche Dichtungswirkung erreicht werden kann.

Die Kontermutter dient der unmittelbaren oder der mittelbaren Abdichtung des Endes des Rohres. Eine mittelbare Abdichtung liegt beispielsweise vor, wenn zwischen Kontermutter und Rohrende ein Adapter vorgesehen wird. Bei der unmittelbaren Abdichtung durch die Kontermutter liegt diese direkt an der Öffnung des Endes des Rohres an.

An diese Stelle zeigt sich auch ein weiterer und sehr wesentlicher Vorteil der Lösung. In vorteilhafter Weise sind die hier in Rede stehenden Baueinheiten beispielsweise insbesondere für den Einsatz an Spurstangen in Kraftfahrzeugen geeignet, wie dies im Zusammenhang mit der Erläuterung des Standes der Technik bereits ausgeführt wurde. Zur Fixierung der einzelnen Bauteile gegeneinander dienen dabei gegenwärtig außen auf das Ende des Rohres aufgesetzte Klemmschellen, die mit erheblichem Kraftaufwand verschraubt werden und somit die Bauteile klemmend gegeneinander fixieren. Um die Elastizität zu erhöhen und eine derartige Klemmung zu ermöglichen, weisen die bekannten Lösungen zumindest einen Schlitz im Ende des Rohres sowie in der aus dem Rohr herausragenden Gewindehülse auf. Wie dies eingangs bereits erläutert wurde, führen jedoch gerade diese Schlitze dazu, dass ein Eindringen von Verunreinigungen und Feuchtigkeit in das Innere der Baueinheit kaum zu verhindern ist. Diesem Umstand wird mit der Lösung ebenfalls Rechnung getragen. Da die Gewindehülse vollständig im Ende des Rohres aufgenommen ist und die Fixierung der Einzelteile mittels einer Kontermutter erfolgt, werden auf diese Wiese die Bauteile der Baueinheit gegeneinander verspannt und fixiert, so dass zusätzliche Klemmschellen auf dem Außenumfang des Rohres nicht mehr erforderlich sind. Dadurch können jedoch auch die zuvor erwähnten Schlitze vermieden werden, was neben der Verminderung der Anzahl der erforderlichen Bauteile auch eine Reduzierung des Fertigungsaufwandes für eine Baueinheit bedeutet und zudem eine deutliche Verbesserung der Abdichtung darstellt. Die Dichtung wurde damit insgesamt vereinfacht und mit der Fixierung der Bauteile der Baueinheit verbunden.

Um während der Verstellbewegung der Gewindehülse eine Gegenkraft am Rohr erzeugen zu können, geht ein weiterer Vorschlag dahin, dass an der Außenmantelfläche des Rohres eine Werkzeugansatzfläche ausgebildet ist. Hierbei kann es sich im einfachsten Fall um eine Schlüsselfläche handeln, die dazu dient, einen Maulschlüssel anzusetzen.

Da die Längeneinstellung der Baueinheit in der Regel manuell erfolgen wird, ist es sinnvoll, für den hiermit beauftragten Anwender an der Außenmantelfläche des Rohres eine Skala vorzusehen. Diese kann durch Markierungen gebildet werden. Vorzugsweise werden also an der Außenmantelfläche des Rohres mehrere Markierungen angebracht, die das Ausmaß der Verstellbewegung verdeutlichen. Somit kann, um bei dem Beispiel einer Spurstange für Kraftfahrzeuge zu bleiben, beispielsweise beidseitig exakt der gleiche Längenwert eingestellt werden.

Um zu verhindern, dass durch eine fehlerhafte Bedienung der Baueinheit beispielsweise die Gewindehülse zu weit in das Rohr hineingeschraubt wird und sich damit die Bauteile voneinander separieren, sieht eine sinnvolle Ausgestaltung vor, dass zur Reduzierung des Axialweges der Gewindehülse das Innengewinde des Rohres eine begrenzte Länge aufweist. Mit dieser einfachen Maßnahme kann ein zu weites Verschrauben der Gewindehülse vermieden werden. Spätestens am Ende des Innengewindes des Rohres erfährt die Gewindehülse einen Anschlag und kann nicht weiter bewegt werden. Ein Ablösen der Gewindehülse vom Schaft ist damit vermeidbar. Die Bedienperson bemerkt ferner den verursachten Fehler und kann die Gewindehülse nunmehr wieder aus dem Rohr herausdrehen.

Eine Weiterführung sieht ferner vor, dass die Gewindehülse zur Begrenzung des Verstellweges ein von dem Schaft durchgriffenes Sperrglied aufweist, das in einer an der Außenmantelfläche des Schaftes vorhandenen Nut begrenzt axial bewegbar aufgenommen und in eine in die Innenmantelfläche der Gewindehülse eingebrachte Nut eingesetzt ist. Dabei werden bevorzugt die Nuten entlang der Außenmantelfläche des Schaftes und entlang der Innenmantelfläche der Gewindehülse umlaufend ausgeführt. Diese Variante stellt nämlich eine besonders einfache Fertigungsmöglichkeit dar. Somit lässt sich die Gewindehülse zusammen mit dem Sperrglied als vorgefertigte Baueinheit herstellen. Die Montage ist insgesamt vereinfacht. Das Sperrglied wird ohne Axialspiel, jedoch mit einem Freiraum in radialer Richtung in die Nut an der Innenmantelfläche der Gewindehülse eingebracht. Das radiale Spiel innerhalb der Nut zur Aufnahme des Sperrgliedes ermöglicht die Nutzung der Eigenelastizität des Sperrgliedes, die für die Montage der Baueinheit von Bedeutung ist. Zur Vereinfachung dieser Montage des Sperrgliedes kann der Schaft ein pilzkappenförmiges Endstück aufweisen, dessen Außenabmessungen größer sind, als die lichte Weite einer Durchgriffsöffnung des Sperrgliedes. Bei der Montage der Baueinheit wird der Schaft mit seinem Endstück in die Durchgriffsöffnung des Sperrgliedes eingeführt, welches sich infolgedessen aufgrund seiner Eigenelastizität innerhalb der Nut der Gewindehülse in radialer Richtung aufweitet und über das Endstück des Schaftes geführt werden kann. Nach Überschreiten des Endstückes des Schaftes zieht sich das Sperrglied aufgrund seiner Eigenelastizität zusammen, so dass es annähernd eine Durchgriffsöffnung aufweist, die dem Umfang der Außenmantelfläche der Nut innerhalb des Schaftes entspricht. Somit liegt das Sperrglied nun in der Nut des Schaftes unmittelbar an der Oberfläche der Nut an. Die Nut des Schaftes verfügt bevorzugt über zwei seitliche Anlageflansche, die den axialen Verstellweg begrenzen. Die Anlageflansche dienen dabei als Anschlag für das Sperrglied.

Mit dieser Lösung kann ebenfalls ein unerwünschtes Lösen der Einzelteile der vorgestellten Baueinheit sicher und zuverlässig vermieden werden. Der zur Verfügung stehende, begrenzte axiale Verstellweg der Bauteile relativ zueinander ist durch diese Ausführung in einfacher Weise definiert. Aufgrund des Umstandes, dass der Schaft das Sperrglied durchgreift, kann das Sperrglied innerhalb der Baueinheit angeordnet sein. Dies hat zur Folge, dass es geschützt vor mechanischen oder thermischen beziehungsweise chemischen Einflüssen eine zuverlässige Sicherung darstellt, die über die gesamte Lebensdauer der Baueinheit hinweg gewährleistet ist. Diese Lösung weist jedoch noch weitere Vorteile auf, die beispielsweise in der Vermeidung einer unsachgemäßen Verstellbewegung der Baueinheit oder in dem einfachen Aufbau bestehen.

Eine Verwendungsmöglichkeit einer Baueinheit besteht darin, dass die Baueinheit Bestandteil einer Spurstange für Kraftfahrzeuge und der Schaft endseitig ein Kugelgelenkgehäuse aufweist.

Ein Verfahren zur Anwendung einer Baueinheit besteht darin, dass der Schaft und das Rohr durch eine Drehung der Gewindehülse innerhalb des Rohres in entgegen gesetzten Richtungen bewegt werden, wobei die Kupplungskontur der Gewindehülse zur Einleitung des für die Drehbewegung der Gewindehülse erforderlichen Drehmomentes über ein Werkzeug oder einen Adapter dient. Ein Adapter oder ein Werkzeug werden für das Verfahren in jedem Fall benötigt, weil die Gewindehülse in das Ende des Rohres hineingeschraubt ist.

Ein Werkzeug zur Anwendung des Verfahrens weist einen Griff und eine Schlüsselfläche mit einer cycloiden, beispielsweise maximal halbkreisförmigen Ausnehmung zum Aufsetzen auf das Außengewinde des Schaftes sowie wenigstens einen senkrecht von der Schlüsselfläche abstehenden, zur Kupplungskontur komplementären Zapfen auf. Dieses manuell zu betätigende Werkzeug wird, nachdem die Kontermutter vollständig gelöst wurde, mit der cycloiden Ausnehmung auf das Außengewinde des Schaftes aufgesetzt. Der mindestens eine an der Schlüsselfläche des Werkzeuges vorhandene Zapfen greift anschließend in die Kupplungskontur der Gewindehülse ein. Bevorzugt werden jedoch mehrere Zapfen vorgesehen, um eine bessere Verteilung der eingeleiteten Kraft zu erreichen. Nachdem das Werkzeug an der Kupplungskontur angesetzt wurde, kann es unter Abstützung auf dem Gewinde des Schaftes mittels des daran vorhandenen Griffes gedreht werden, wobei das Werkzeug über die Zapfen und die Kupplungskontur die Gewindehülse mitbewegt.

Darüber hinaus bestehen weitere Möglichkeiten zur Ausführung eines geeigneten Werkzeuges. So geht ein anderer Vorschlag dahin, dass das Werkzeug eine cycloide, beispielsweise maximal halbkreisförmige Ausnehmung zum Aufsetzen auf das Außengewinde des Schaftes an seiner Innenseite und eine Werkzeugansatzfläche an seiner Außenkontur sowie wenigstens einen senkrecht zum Umfang der Ausnehmung abstehenden, zur Kupplungskontur komplementären Zapfen aufweist. Dieses Werkzeug wird folglich nicht von Hand betätigt, sondern mit der cycloiden Ausnehmung auf das Außengewinde des Schaftes aufgesetzt, sodann in axialer Richtung entlang des Schaftes auf die Kupplungskontur der Gewindehülse zu bewegt, wodurch der am Werkzeug vorhandene Zapfen und die Kupplungskontur miteinander in Eingriff gelangen. Daran anschließend kann an der auf der Außenkontur des Werkzeugs vorhandenen Werkzeugansatzfläche ein weiteres Werkzeug angesetzt und dadurch die Gewindehülse verstellt werden. Im einfachsten Fall wird eine Werkzeugansatzfläche vorgesehen, die einer Sechskantmutter nachgebildet ist, so dass die Möglichkeit besteht, einen Maulschlüssel an der Außenmantelfläche des Werkzeuges anzusetzen und damit die Gewindehülse zu verstellen. Mit dieser Lösung können größere Kräfte übertragen als es mit einem von Hand zu betätigenden Werkzeug der Fall ist.

Es ist eine Spurstange für Kraftfahrzeuge unter Schutz gestellt, deren Ausführungsvarianten sich auf die mit der beschriebenen Baueinheit beziehen. Es handelt sich dabei um eine Spurstange für Kraftfahrzeuge, insbesondere für Nutzfahrzeuge, mit einem wenigstens einseitig mit einem in einer ersten Drehrichtung gängigen Innengewinde versehenen Rohr, in das endseitig eine Gewindehülse eingeschraubt ist, wobei die Gewindehülse ein zu der ersten Drehrichtung entgegengesetzt gängiges Innengewinde mit einem darin eingeschraubten Schaft eines Kugelgelenkgehäuses aufweist. Dabei ist die Gewindehülse vollständig in dem Endabschnitt des Rohres aufgenommen und die Fixierung des Rohres zu dem in die Gewindehülse eingeschraubten Schaft des Kugelgelenkgehäuses erfolgt ausschließlich durch axiale Verspannung mittels einer Kontermutter.

Durch die axiale Verspannung der Bauteile ergeben sich eine Reihe von Vorteilen. Die Verspannung von Rohr, Gewindehülse und Schaft nach dem Stand der Technik erfolgt nach dem Justieren des Schaftes des Kugelgelenkgehäuses durch ein radiales Zusammendrücken des geschlitzten Rohrendes und der geschlitzten Gewindehülse durch eine Schelle, die mit einer Klemmschraube angezogen wird. Die Schelle umgreift dabei im montierten Zustand das geschlitzte Rohrende, die geschlitzte Gewindehülse und den Schaft des Kugelgelenkgehäuses.

Um die Schelle aufsetzen zu können, muss das Rohrende gegenüber dem Ursprungsdurchmesser verjüngt ausgeführt werden, was einen Zusatzaufwand darstellt.

Außerdem ergeben sich bei der Ausführung nach dem Stand der Technik bei der Umsetzung in Serie zum Teil große Unterschiede in der Klemmwirkung. Diese Unterschiede liegen unter anderem in der Verwendung einer toleranzbehafteten Klemmschelle mit Abweichungen in der Dicke des Materials, in den Rauheiten der mit den Fügepartnern in Berührung stehenden Oberflächen und sonstigen Schwankungen von Funktionsmaßen begründet. Weitere Unterschiede in der Klemmwirkung haben ihre Ursache in der Klemmschraube, die in der Serie bezüglich ihrer Eigenschaften schwanken kann. Weiterhin ist gerade bei mehrmaligem Wiederanzug der Klemmschraube die Klemmkraft nicht in exakt gleicher Höhe reproduzierbar. Darüber hinaus können sich Schwankungen in der Klemmkraft durch die Art des Fügens der Klemmschraube ergeben. Versuche haben gezeigt, dass das Anziehen der Mutter oder des Schraubenbolzens der Klemmschraube mit dem gleichen Drehmoment zu unterschiedlichen Klemmkräften führt. Insgesamt wird durch die axiale Verspannung von Rohr, Gewindehülse und Schaft eine konstantere und prozesssicherere Klemmwirkung als bei der Verwendung von Klemmschellen nach dem Stand der Technik erreicht. Dies liegt wesentlich darin begründet, dass bei der axialen Verspannung weniger Bauteile bzw. Fügepartner zusammenwirken, wodurch die Einflussmöglichkeiten auf die die Bauteile verbindende Fügekraft reduziert werden.

Die Erfindung wird nachfolgend anhand der beigefügten Zeichnung näher erläutert. Die gezeigten Ausführungsbeispiele stellen keine Einschränkung auf die dargestellten Varianten dar, sondern dienen lediglich der Erläuterung des Prinzips der Erfindung. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigen:
- Figur 1:: eine Schnittdarstellung durch eine erste Ausführungsvariante einer Baueinheit,
- Figur 2:: einen Adapter als Einzelteil und in perspektivischer Darstellung,
- Figur 3:: eine zweite Variante einer Baueinheit im Schnitt,
- Figur 4:: einen für die Variante in Figur 3 geeigneten Adapter als Einzelteil und in perspektivischer Ansicht,
- Figur 5:: eine Schnittdarstellung einer weiteren Ausführungsvariante einer Baueinheit,
- Figur 6:: den Schnittverlauf VI-VI aus Figur 5,
- Figur 7:: eine vierte Möglichkeit für eine Baueinheit im Schnitt,
- Figur 8:: eine weitere Gestaltungsvariante einer Baueinheit im Schnitt,
- Figur 9:: den Schnittverlauf IX-IX aus Figur 8,
- Figur 10:: ein erstes nicht beanspruchtes Werkzeug in perspektivischer Ansicht als Einzelteil dargestellt,
- Figur 11:: ein zweites nicht beanspruchtes Werkzeug in perspektivischer Ansicht als Einzelteil
und
- Figur 12:: ausschnittsweise einen Schnitt durch den Endbereich des Schaftes.

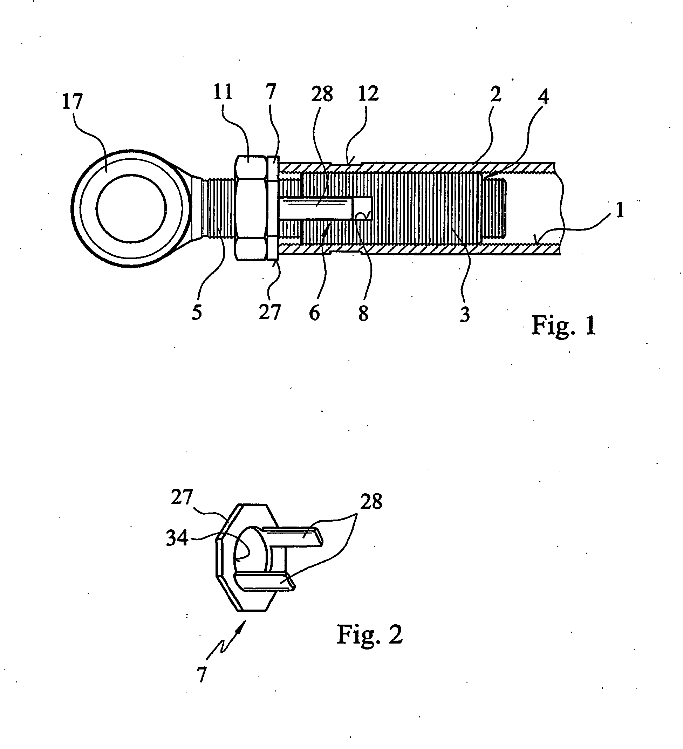

In der Figur 1 ist am Beispiel des Endstückes einer Spurstange für ein Kraftfahrzeug eine Baueinheit in einer ersten Ausführungsvariante im Schnitt und in einer vereinfachten Darstellung gezeigt. Die Baueinheit weist ein mit einem in einer ersten Drehrichtung gängigen Innengewinde 1 versehenes Rohr 2 auf, in das endseitig eine Gewindehülse 3 eingeschraubt ist. Die Gewindehülse 3 verfügt ihrerseits über ein zu der ersten Drehrichtung entgegengesetzt gängiges Innengewinde 4. In das Innengewinde 4 ist ein Schaft 5 eingeschraubt, dessen außen liegendes, freies Ende durch ein Kugelgelenkgehäuse 17 gebildet wird. Der Schaft 5 durchdringt die Gewindehülse 3 vollständig. Im rechten Bildteil der Figur 1 ist daher noch ein Endstück des Schaftes 5 erkennbar, das aus der Gewindehülse 3 herausragt. Auf der zu der Öffnung des Rohres 2 weisenden Seite verfügt die Gewindehülse 3 über eine Kupplungskontur 6, die schlitzförmige Ausnehmungen 8 aufweist, die sich in Richtung der zwischen Rohr 2 und Schaft 5 zu vollziehenden Verstellbewegung erstreckt. In die schlitzförmige Ausnehmung 8 der Gewindehülse 3 greift ein Arm 28 eines Adapters 7 ein, wobei der Arm 28 innerhalb der schlitzförmigen Ausnehmung 8 der Gewindehülse 3 leichtgängig und gleitend verschiebbar ist. Der Arm 28 als Bestandteil des Adapters 7 greift somit formschlüssig in die Kupplungskontur 6 der Gewindehülse 3 ein. Die Besonderheit des Adapters 7 besteht ferner darin, dass dieser von seinen Abmessungen her so gestaltet ist, dass er insgesamt entlang des Schaftes 5 gewindeunabhängig verschiebbar ist. An einem flanschartig ausgebildeten Teil des Adapters 7 ist dieser mit einer Werkzeugansatzfläche 27 ausgestattet, so dass er von der Außenseite der Baueinheit her mit einem hierzu geeigneten Werkzeug bewegt werden kann. Um die Gegenkraft zu dieser Drehbewegung bereitstellen zu können, verfügt auch das Rohr 2 an seiner Außenmantelfläche über eine Werkzeugansatzfläche 12. In dem gezeigten Beispiel sind die Werkzeugansatzflächen 12 und 27 derartig ausgebildet, dass jeweils die Möglichkeit gegeben ist, einen Maulschlüssel anzusetzen. Die gesamte Baueinheit ist ferner mittels einer Kontermutter 11 fixiert. Die Kontermutter 11 hat dabei in Zusammenwirkung mit dem Adapter 7 einerseits die Aufgabe, die Baueinheit und insbesondere das offene Ende des Rohres 2 gegen das Eindringen von Verunreinigungen und Feuchtigkeit abzudichten. Darüber hinaus fixiert sie die relativ zueinander bewegbaren Bauteile in ihrer einmal eingestellten Position.

In der Figur 2 wird ein Adapter 7 gezeigt, wie er in einer Baueinheit nach Figur 1 zum Einsatz kommen kann. Dieser Adapter 7 verfügt über eine Werkzeugansatzfläche 27 an einem flanschartig ausgebildeten Teil. Darüber hinaus stehen etwa senkrecht zu dieser Fläche zwei Arme 28 ab. Wie in der Darstellung der Figur 2 erkennbar wird, sind die Innenoberfläche der Arme 28 und der Durchmesser der Durchgangsbohrung 34 des Adapters 7 mit einer glatten Oberfläche versehen, so dass der Adapter 7 in der Lage ist, auf dem Außengewinde des Schaftes 5 zu gleiten.

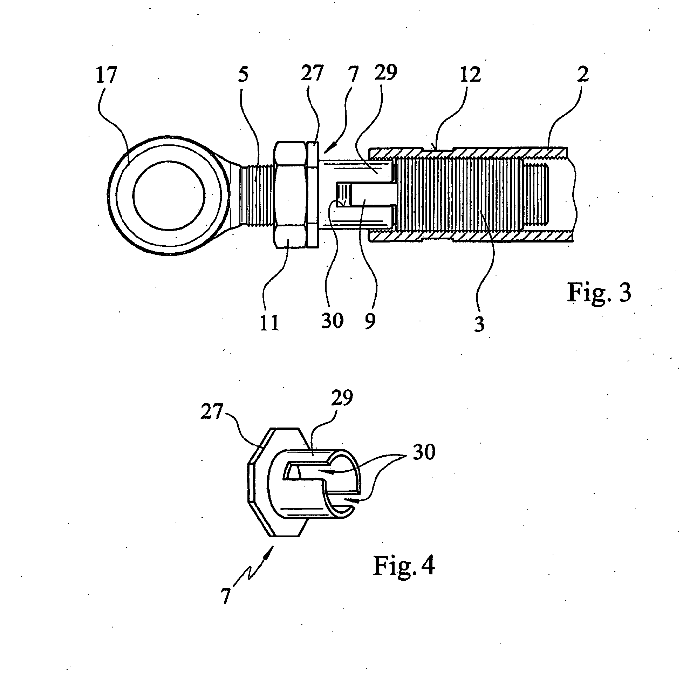

In der Figur 3 ist eine in ihrem grundsätzlichen Aufbau eine zu der in Figur 1 dargestellten Baueinheit ähnliche Variante gezeigt. Die wesentlichen Unterschiede sind hierbei in der Kupplungskontur 6 der Gewindehülse 3 und ihrer Verbindung mit dem Adapter 7 zu sehen. So weist die Gewindehülse 3 in Richtung der Öffnung des Rohres 2 weisend einen Zapfen 9 auf, der in einen Schlitz 30 des Adapters 7 mündet. Dieser Schlitz 30 des Adapters 7 ist in die Mantelfläche 29 des Adapters 7 eingelassen. Auch der in Figur 3 gezeigte Adapter 7 verfügt über eine flanschartige Erweiterung, an deren Außenumfang eine Werkzeugansatzfläche 27 ausgebildet ist.

Besser als aus der Figur 3 lässt sich der Adapter 7 der Figur 4 entnehmen. Hieraus geht der Aufbau des Adapters 7 hervor, der zwei einander diametral gegenüberliegende Schlitze 30 innerhalb einer Mantelfläche 29 aufweist, die als ansonsten geschlossene Mantelfläche mit einem kreisrunden Querschnitt ausgeführt ist. An dem flanschartigen Teil des Adapters 7 befindet sich die bereits erwähnte Werkzeugansatzfläche 27.

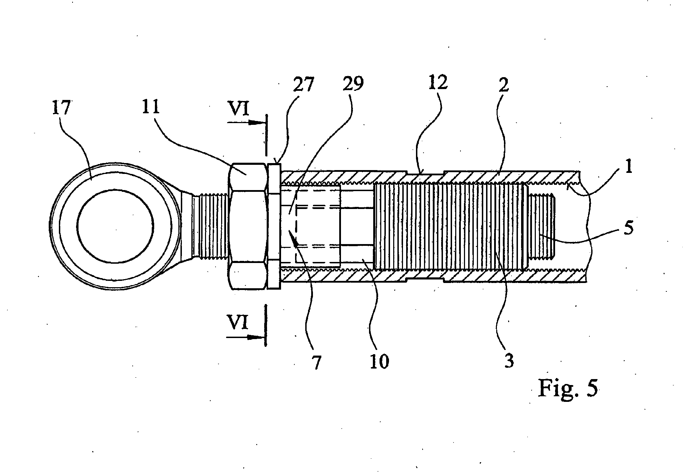

Eine weitere Gestaltung einer Baueinheit ist in der Figur 5 im Schnitt gezeigt. Die Besonderheit dieser Variante besteht darin, dass die Gewindehülse 3 auf der dem Ende des Rohres 2 zugewandten Seite eine polygonale Kontur 10 aufweist. Zu dieser korrespondierend verfügt auch der Adapter 7 auf seiner Innenseite der Mantelfläche 29 über eine komplementäre polygonale Kontur. Die flanschartige Erweiterung des Adapters 7, die auch bei diesem Beispiel der Abdichtung des Rohres 2 dient, verfügt ebenfalls über eine zuvor bereits beschriebene Werkzeugansatzfläche 27.

Die in Figur 5 gezeigte Ausführungsform ermöglicht neben dem Einsatz eines Adapters auch die Verwendung eines speziellen Werkzeugschlüssels, der auf die polygonale Kontur 10 der Gewindehülse 3 aufsetzbar ist. Um mit der polygonalen Kontur 10 in Kontakt treten zu können, muss der Werkzeugschlüssel hierzu allerdings in das offene Ende des Rohres 2 eingeführt werden. Dies wäre für eine Ausführungsvariante zu berücksichtigen, die ohne den hier gezeigten Adapter 7 auskommen soll.

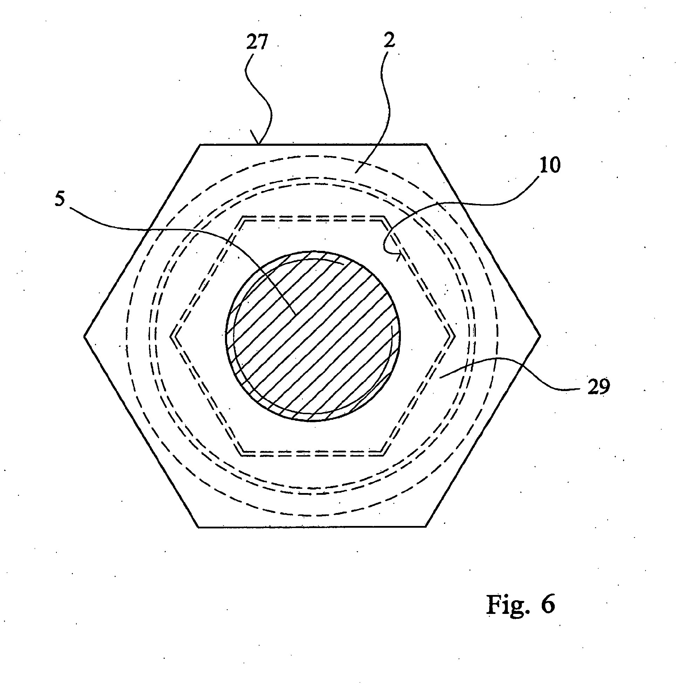

Der Schnittverlauf VI-VI aus Figur 5 ist in der Figur 6 gezeigt. Hieraus wird noch einmal das Ineinandergreifen der einzelnen Bauelemente ersichtlich. Auf dem Schaft 5 ist dabei die Gewindehülse 3 mit ihrem Innengewinde aufgeschraubt. Diese weist die polygonale Kontur 10 auf. Die polygonale Kontur 10 wird von der korrespondierenden Mantelfläche 29 des Adapters 7 umschlossen, so dass eine Längsbewegung im Sinne einer Verschiebung des Adapters 7 auf der polygonalen Kontur 10 möglich ist. Diese Bewegungsmöglichkeit ist auch in diesem Fall gewindeunabhängig. An der flanschartigen Erweiterung des Adapters 7 ist an der Außenoberfläche die Werkzeugansatzfläche 27 vorhanden.

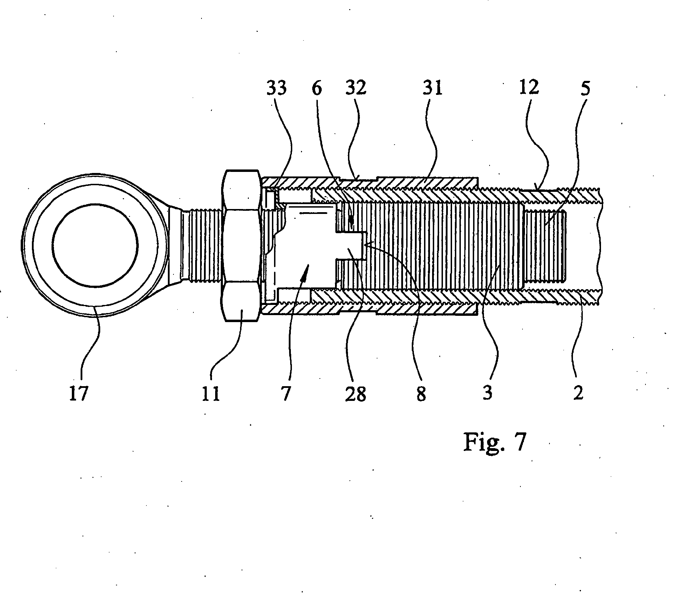

Ein weiteres Beispiel für eine Baueinheit geht aus der Darstellung in Figur 7 hervor. Hierbei verfügt die in das Rohr 2 eingeschraubte Gewindehülse 3 auf der dem Ende des Rohres 2 zugewandten Seite über eine Kupplungskontur 6 mit einer schlitzförmigen Ausnehmung 8. In diese schlitzförmige Ausnehmung 8 der Gewindehülse 3 greift gleitend ein Arm 28 des Adapters 7 ein. Die Besonderheit bei der in Figur 7 gezeigten Lösung besteht darin, dass der als Flansch 33 ausgebildete Teil des Adapters 7 fest mit einer auf der Außenmantelfläche des Rohres 2 aufgeschraubten Hülse 31 verbunden ist, wozu das Rohr 2 entlang eines Abschnittes seiner Außenmantelfläche ein zu der Hülse 31 korrespondierendes Gewinde aufweist. Die Verbindung zwischen Flansch 33 und Hülse 31 kann eine stoffschlüssige Verbindung sein oder mittels eines Presssitzes, beziehungsweise einer Presspassung, erfolgen. Somit kann über eine Verstellung der Hülse 31 am Außenumfang des Rohres 2 der Adapter 7 und damit die Gewindehülse 3 im Innern des Rohres 2 verstellt werden. Zur Fixierung der Bauteile gegeneinander dient auch hier die Kontermutter 11, die ferner die Aufgabe der Abdichtung der Baueinheit gegen das Eindringen von Verunreinigungen hat. Auf der Außenmantelfläche der Hülse 31 ist darüber hinaus eine Werkzeugansatzfläche 32 vorhanden.

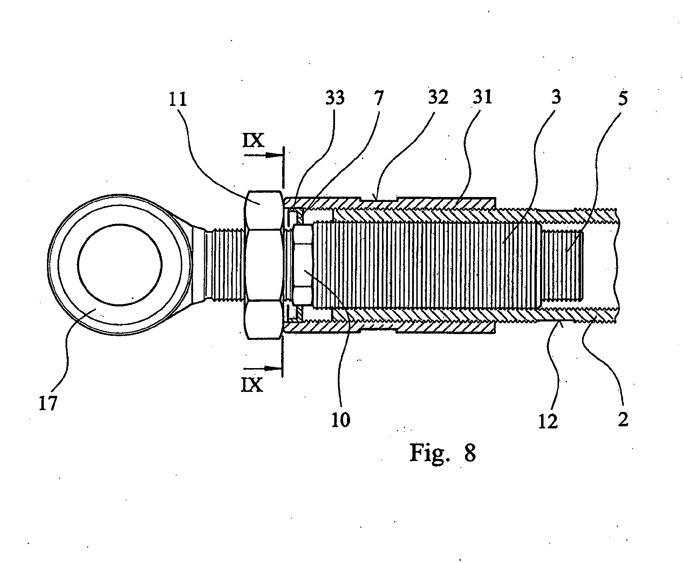

In der Figur 8 ist im Schnitt eine Ausführung gezeigt, bei der an der Gewindehülse 3, auf der Öffnungsseite des Rohres 2 eine polygonale Kontur 10 ausgebildet ist. Mit dieser polygonalen Kontur 10 korrespondiert eine komplementär gestaltete Innenkontur des Adapters 7. Der Adapter 7 gleitet folglich entlang der Längserstreckung der polygonalen Kontur 10 der Gewindehülse 3 während der Verstellbewegung und überträgt gleichfalls die Drehbewegung über diese polygonale Kontur 10. Der Adapter 7 weist auch bei dieser Lösungsvariante einen Flansch 33 auf, der fest mit einer auf der Außenmantelfläche des Rohres 2 aufgeschraubten Hülse 31 verbunden ist. Die Hülse 31 und das Rohr 2 weisen wiederum in der zuvor bereits beschriebenen Weise Werkzeugansatzflächen 12 und 32 auf. Zur Abdichtung und Fixierung der Bauteile dient eine Kontermutter 11 auf dem Außengewinde des Schaftes 5.

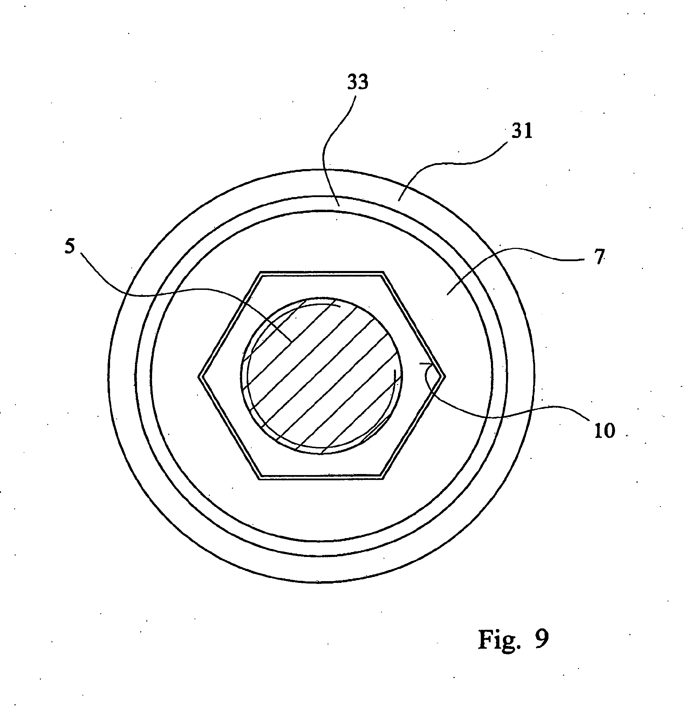

Der Schnittverlauf IX-IX in Figur 8 ist in der Figur 9 gezeigt. Hieraus wird ersichtlich, dass die Gewindehülse 3 auf den Schaft 5 geschraubt ist und mit ihrer polygonalen Kontur 10 mit der korrespondierenden Kontur der Innenmantelfläche des Adapters 7 zusammenwirkt. Der Flansch 33 des Adapters 7 ist dabei fest mit der Hülse 31 verbunden.

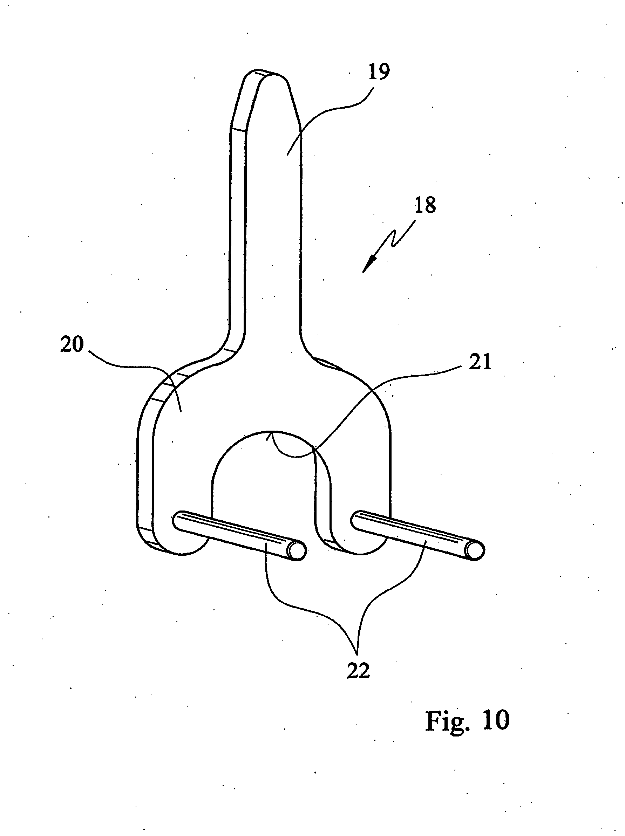

In der Figur 10 wird beispielhaft ein Werkzeug zur manuellen Betätigung und Einstellung einer Baueinheit dargestellt. Dieses insgesamt mit 18 bezeichnete Werkzeug verfügt über einen Griff 19, der in eine Schlüsselfläche 20 übergeht. Die Schlüsselfläche 20 weist zentral eine cycloide und hier halbkreisförmige Ausnehmung 21 auf. Im rechten Winkel von der Schlüsselfläche 20 abragend verfügt das Werkzeug 18 über zwei Zapfen 22, die mit der Kupplungskontur der Gewindehülse in Eingriff gebracht werden können, während die halbkreisförmige Ausnehmung 21 gleitend auf dem Außengewinde des Schaftes aufgesetzt ist. Der Griff 19 des Werkzeugs 18 dient der Betätigung von Hand.

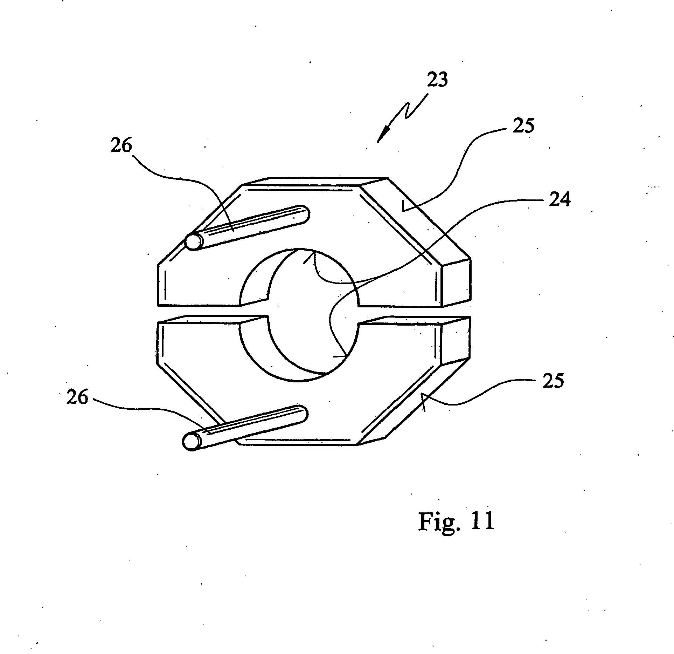

Ein weiteres Werkzeug zur Anwendung eines Verfahrens ist in der Figur 11 gezeigt. Dieses zweiteilige Werkzeug 23 weist an jeder Hälfte ebenfalls eine cycloide, im vorliegenden Fall halbkreisförmige Ausnehmung 24 auf, die wie in dem zuvor bereits erläuterten Beispiel auf das Gewinde des Schaftes 5 aufgesetzt wird und darauf gleitend geführt werden kann. Die Außenmantelfläche des Werkzeuges 23 verfügt über eine Werkzeugansatzfläche 25, die hier insgesamt einer Sechskantmutter nachgebildet wurde, die entsteht, wenn beide Werkzeughälften auf den Schaft 5 aufgesetzt sind, sodass einMaulschlüssel an dem Werkzeug angesetzt werden kann. Senkrecht von der Oberfläche des Werkzeuges 23 stehen zwei Zapfen 26 ab, die in eine korrespondierende Kupplungskontur 6 der Gewindehülse 3 eingreifen können.

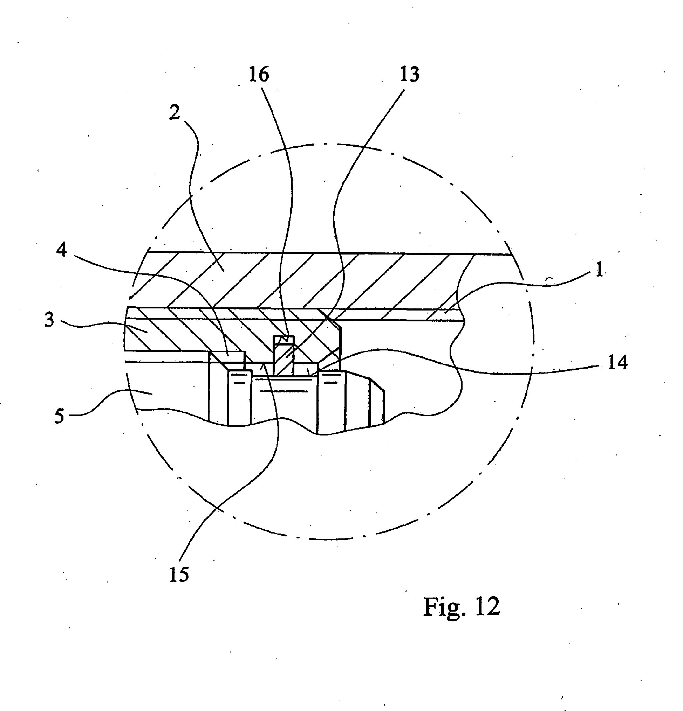

In der Figur 12 ist beispielhaft eine Möglichkeit dargestellt, wie eine Begrenzung des Verstellweges in eine Baueinheit integriert werden kann. Damit ist jedoch auch eine Möglichkeit gegeben, zu verhindern, dass die Bauteile durch unsachgemäße Handhabung voneinander getrennt werden. Hierzu ist das Endstück des Schaftes 5 in einer besonderen Weise ausgestaltet. Zunächst weist es eine pilzkappenartige Außenkontur auf. Diese pilzkappenartige Erweiterung schließt eine Nut 14 im Schaft 5 ein. Entlang der Oberfläche der Nut 14 gleitet ein Sperrglied 13, das vorliegend ringförmig ausgebildet ist. Demzufolge ist auch die Nut 14 am rohrinnenseitig gelegenen Ende des Schaftes 5 umlaufend ausgeführt. Das Sperrglied 13 ist auf der der Nut 14 gegenüberliegenden Seite in eine weitere Nut 16 in der Gewindehülse 3 eingesetzt. Hier ist die Nut 16 derartig ausgeführt, dass das Sperrglied 13 ein nur geringes axiales Spiel, also ein Spiel in Längsrichtung der Baueinheit aufweist. Jedoch verfügt das Sperrglied 13 innerhalb der Nut 16 über ein ausreichendes radiales Spiel. Das radiale Spiel ist erforderlich, um bei der Erstmontage das begrenzt elastisch ausgeführte Sperrglied 13 über die pilzkappenförmige Erweiterung des Endabschnittes des Schaftes 5 schieben zu können, so das nach der Überwindung der pilzkappenförmigen Erweiterung des Schaftendes das Sperrglied 13 in die Nut 14 des Schaftes 5 einschnappt. Aufgrund seiner Elastizität zieht es sich wieder zusammen. Die Nut 14 weist in dem Schaftende 5 eine axiale Erstreckung in Richtung der Längsrichtung des Schaftes 5 auf, so dass der erforderliche Verstellweg der Gewindehülse 3 innerhalb der Baueinheit gewährleistet ist.

### Bezugszeichenliste

- 1: Innengewinde (Rohr)
- 2: Rohr
- 3: Gewindehülse
- 4: Innengewinde (Gewindehülse)
- 5: Schaft
- 6: Kupplungskontur
- 7: Adapter
- 8: schlitzförmige Ausnehmung
- 9: Zapfen
- 10: polygonale Kontur
- 11: Kontermutter
- 12: Werkzeugansatzfläche
- 13: Sperrglied
- 14: Nut (im Schaft)
- 15: Innenmantelfläche (der Gewindehülse)
- 16: Nut (in der Gewindehülse)
- 17: Kugelgelenkgehäuse
- 18: Werkzeug
- 19: Griff
- 20: Schlüsselfläche
- 21: halbkreisförmigen Ausnehmung
- 22: Zapfen
- 23: Werkzeug
- 24: Ausnehmung
- 25: Werkzeugansatzfläche
- 26: Zapfen
- 27: Werkzeugansatzfläche
- 28: Arm
- 29: Mantelfläche
- 30: Schlitz
- 31: Hülse
- 32: Werkzeugansatzfläche
- 33: Flansch
- 34: Durchgangsbohrung

## Patentansprüche

1. Spurstange für Kraftfahrzeuge, insbesondere für Nutzfahrzeuge, mit einem wenigstens einseitig mit einem in einer ersten Drehrichtung gängigen Innengewinde (1) versehenen Rohr (2), in das endseitig eine Gewindehülse (3) eingeschraubt ist, wobei die Gewindehülse (3) ein zu der ersten Drehrichtung entgegengesetzt gängiges Innengewinde (4) mit einem darin eingeschraubten Schaft (5) eines Kugelgelenkgehäuses (17) aufweist,
**dadurch gekennzeichnet, dass**
die Gewindehülse (3) vollständig in dem Endabschnitt des Rohres (2) aufgenommen ist und die Fixierung des Rohres (2) zu dem in die Gewindehülse (3) eingeschraubten Schaft (5) des Kugelgelenkgehäues (17) ausschließlich durch axiale Verspannung mittels einer Kontermutter (11) erfolgt.

2. Spurstange für Kraftfahrzeuge nach Anspruch 1,
**dadurch gekennzeichnet, dass**
die den Schafft (5) ringförmig umgebende Öffnung des Endabschnitts des Rohres (2) mittels der Kontermutter (11) direkt oder unter Zwischenschaltung eines verechlusseleinentes verschlossen ist.

3. Spurstange für Kraftfahrzeuge nach Anspruch 1 oder 2,
**dadurch gekennzeichnet, dass**
die Gewindehülse) (3) auf der öffnungsseite des Rohres (2) eine Kupplungskontur (6) aufweist.

4. Spurstange für Kraftfahrzeuge nach Anspruch 3,
dadurch gekenntzeichnet, dass
die Kupplungskontur (6) der Gewindehülle (3) eine Werkzeugangrifts- oder Werkzeugeingriffsfläche bildet.

5. Spurstange für Kraftfahrzeuge nach Anspruch 4,
**dadurch gekennzeichnet, dass**
die Kupplungskontur (6) der Gewindehülse (3) eine Kontur zum wechselseitigen, formschlüssigen Ineinandergreifen der Gewindehülse (3) mit einem Adapter (7) ist.

6. Spurstange für Kraftfahrzeuge nach Anspruch 4 oder 5,
**dadurch gekennzeichnet, dass**
die Gewiridehülse (3) als Kupplungskontur (6) zumindest eine schlitzförmige Ausnehmung (8) und/oder wenigstens einen an der Gewindehülse (3) ausgebildeten Zapfen (9) und/oder einen Abschnitt mit einer polygonalen Kontur (10) aufweist.

7. Spurstange für Kraftfahrzeuge nach Anspruch 5 oder 6,
**dadurch gekennzeichnet, dass**
der Adapter (7) zwischen Schaft (5) und Rohr (2) axial verschiebbar ist und nicht mit einem Gewinde in Eingriff steht.

8. Spurstange für Kraftfahrzeuge nach einem der Ansprüche 5 bis 7,
**dadurch gekennzeichnet, dass**
die Außenmaße des Adapters (7) zumindest abschnittsweise geringer sind, als der Innendurchmesser des Innengewindes (1) des Rohres (2) und die Innenmaße des Adapters (7) über seine gesamte Länge größer sind, als der Außendurchmesser des Außengewindes des Schaftes (5)

9. Spurstange für Kraftfahrzeuge nach einem der Ansprüche 5 bis 7,
**dadurch gekennzeichnet, dass**
der Adapter (7) mit einer auf ein Außengewinde des Rohres (2) aufgeschraubten Hülse (31) fest verbunden ist, die auf ihrer Außenmantelfläche eine Werkzeugansatzfläche (32) aufweist.

10. Spurstange für Kraftfahrzeuge nach einem der Ansprüche 5 bis 9,
**dadurch gekennzeichnet, dass**
der Adapter (7) beziehungsweise die Bauteilverbindung zwischen Rohr (2) und Schaft (5) mittels einer Kontermutter (11) fixierbar ist.

11. Spurstange für Kraftfahrzeuge nach Anspruch 10,
**dadurch gekennzeichnet, dass**
die Kontermutter (11) selbstsichernd ist oder mit einem Sicherungselement versehen ist.

12. Spurstange für Kraftfahrzeuge nach einem der Ansprüche 1 bis 11,
**dadurch gekennzeichnet, dass**
an der Außenmantelfläche des Rohres (2) eine Werkzeugansatzfläche (12) ausgebildet ist.

13. Spurstange für Kraftfahrzeuge nach einem der Ansprüche 1 bis 12,
**dadurch gekennzeichnet, dass**
an der Außenmantelfläche des Rohres (2) eine Skala bildende Markierungen zur Längeneinstellung der Spurstange vorhanden sind.

14. Spurstange für Kraftfahrzeuge nach einem der Ansprüche 1 bis 13,
**dadurch gekennzeichnet, dass**
zur Begrenzung des Axialweges der Gewindehülse (3) das Innengewinde (1) des Rohres (2) eine definierte Länge aufweist.

15. Spurstange für Kraftfahrzeuge nach einem der Ansprüche 1 bis 14,
**dadurch gekennzeichnet, dass**
die Gewindehülse (3) ein von dem Schaft (5) durchgriffenes Sperrglied (13) aufweist, das in einer an der Außenmantelfläche des Schaftes (5) vorhandenen Nut (14) begrenzt axial bewegbar aufgenommen und in eine in die Innenmantelfläche (15) der Gewindehülse (3) eingebrachte Nut (16) eingesetzt ist.

16. Spurstange für Kraftfahrzeuge nach Anspruch 15,
**dadurch gekennzeichnet, dass**
die Nuten (14,16) entlang der Außenmantelfläche des Schaftes (5) beziehungsweise an der Innenmantelfläche (15) der Gewindehülse (3) umlaufend ausgeführt sind.

## Claims

1. Tie rod for motor vehicles, in particular for commercial vehicles, having a tube (2) which is provided at least on one side with an internal thread (1), which screws in a first rotational direction, and into which a threaded sleeve (3) is screwed on the end side, the threaded sleeve (3) having an internal thread (4) which screws in the opposite direction to the first rotational direction, with a shank (5) screwed therein of a ball joint housing (17), **characterized in that** the threaded sleeve (3) is received completely in the end section of the tube (2) and the fixing of the tube (2) to that shank (5) of the ball joint housing (17) which is screwed into the threaded sleeve (3) takes place exclusively by way of axial bracing by means of a lock nut (11).

2. Tie rod for motor vehicles according to Claim 1, **characterized in that** that opening of the end section of the tube (2) which surrounds the shank (5) annularly is closed by means of the lock nut (11) directly or with a closure element connected in between.

3. Tie rod for motor vehicles according to Claim 1 or 2, **characterized in that** the threaded sleeve (3) has a coupling contour (6) on the opening side of the tube (2).

4. Tie rod for motor vehicles according to Claim 3, **characterized in that** the coupling contour (6) of the threaded sleeve (3) forms a tool action face or tool engagement face.

5. Tie rod for motor vehicles according to Claim 4, **characterized in that** the coupling contour (6) of the threaded sleeve (3) is a contour for the mutual, positively locking engagement of the threaded sleeve (3) with an adapter (7).

6. Tie rod for motor vehicles according to Claim 4 or 5, **characterized in that** the threaded sleeve (3) has, as coupling contour (6), at least one slot-shaped recess (8) and/or at least one pin (9) which is formed on the threaded sleeve (3) and/or a section with a polygonal contour (10).

7. Tie rod for motor vehicles according to Claim 5 or 6, **characterized in that** the adapter (7) can be displaced axially between the shank (5) and the tube (2) and is not in engagement with a thread.

8. Tie rod for motor vehicles according to one of Claims 5 to 7, **characterized in that** the external dimensions of the adapter (7) are smaller at least in sections than the internal diameter of the internal thread (1) of the tube (2) and the internal dimensions of the adapter (7) are greater over its entire length than the external diameter of the external thread of the shank (5).

9. Tie rod for motor vehicles according to one of Claims 5 to 7, **characterized in that** the adapter (7) is connected fixedly to a sleeve (31) which is screwed onto an external thread of the tube (2) and has a tool attachment face (32) on its outer circumferential face.

10. Tie rod for motor vehicles according to one of Claims 5 to 9, **characterized in that** the adapter (7) or the component connection between the tube (2) and the shank (5) can be fixed by means of a lock nut (11).

11. Tie rod for motor vehicles according to Claim 10, **characterized in that** the lock nut (11) is self-locking or is provided with a securing element.

12. Tie rod for motor vehicles according to one of Claims 1 to 11, **characterized in that** a tool attachment face (12) is formed on the outer circumferential face of the tube (2).

13. Tie rod for motor vehicles according to one of Claims 1 to 12, **characterized in that** there are markings which form a scale on the outer circumferential face of the tube (2) for longitudinal setting of the tie rod.

14. Tie rod for motor vehicles according to one of Claims 1 to 13, **characterized in that** the internal thread (1) of the tube (2) has a defined length in order to limit the axial travel of the threaded sleeve (3).

15. Tie rod for motor vehicles according to one of Claims 1 to 14, **characterized in that** the threaded sleeve (3) has a locking element (13) which is engaged through by the shank (5), is received such that it can be moved axially to a limited extent in a groove (14) which is present on the outer circumferential face of the shank (5), and is inserted into a groove (16) which is made in the inner circumferential face (15) of the threaded sleeve (3).

16. Tie rod for motor vehicles according to Claim 15, **characterized in that** the grooves (14, 16) are configured so as to run around along the outer circumferential face of the shank (5) or on the inner circumferential face (15) of the threaded sleeve (3).

## Revendications

1. Barre d'accouplement pour véhicules automobiles, en particulier pour véhicules utilitaires, comprenant un tube (2) pourvu au moins d'un côté d'un filetage intérieur (1) dont le pas est orienté dans un premier sens de rotation, dans lequel tube est vissée, à son extrémité, une douille filetée (3), la douille filetée (3) comprenant un filetage intérieur (4) dont le pas est orienté en sens inverse au premier sens de rotation avec une tige (5), vissée dans celui-ci, d'un boîtier d'articulation à rotule (17),
**caractérisée en ce que**
la douille filetée (3) est reçue entièrement dans la portion d'extrémité du tube (2) et la fixation du tube (2) par rapport à la tige (5), vissée dans la douille filetée (3), du boîtier d'articulation à rotule (17) s'effectue exclusivement par serrage axial au moyen d'un contre-écrou (11).

2. Barre d'accouplement pour véhicules automobiles selon la revendication 1,
**caractérisée en ce que**
l'ouverture de la portion d'extrémité du tube (2) entourant de manière annulaire la tige (5) est fermée au moyen du contre-écrou (11) directement ou par l'intermédiaire d'un élément de fermeture.

3. Barre d'accouplement pour véhicules automobiles selon la revendication 1 ou 2,
**caractérisée en ce que**
la douille filetée (3) présente un contour d' accouplement (6) sur le côté d'ouverture du tube (2).

4. Barre d'accouplement pour véhicules automobiles selon la revendication 3,
**caractérisée en ce que**
le contour d'accouplement (6) de la douille filetée (3) forme une surface d'application d'outil ou une surface d'engagement d'outil.

5. Barre d'accouplement pour véhicules automobiles selon la revendication 4,
**caractérisée en ce que**
le contour d'accouplement (6) de la douille filetée (3) est un contour pour l'engagement réciproque l'un dans l'autre par complémentarité de formes de la douille filetée (3) et d'un adaptateur (7).

6. Barre d'accouplement pour véhicules automobiles selon la revendication 4 ou 5,
**caractérisée en ce que**
la douille filetée (3) comprend, en tant que contour d'accouplement (6), au moins un évidement (8) en forme de fente et/ou au moins une goupille (9) réalisée sur la douille filetée (3) et/ou une portion présentant un contour polygonal (10).

7. Barre d'accouplement pour véhicules automobiles selon la revendication 5 ou 6,
**caractérisée en ce que**
l'adaptateur (7) est déplaçable axialement entre la tige (5) et le tube (2) et ne s'engage pas avec un filetage.

8. Barre d'accouplement pour véhicules automobiles selon l'une quelconque des revendications 5 à 7,
**caractérisée en ce que**
les dimensions extérieures de l'adaptateur (7) sont, au moins par portions, inférieures au diamètre intérieur du filetage intérieur (1) du tube (2) et les dimensions intérieures de l'adaptateur (7) sont, sur toute sa longueur, supérieures au diamètre extérieur du filetage extérieur de la tige (5).

9. Barre d'accouplement pour véhicules automobiles selon l'une quelconque des revendications 5 à 7,
**caractérisée en ce que**
l'adaptateur (7) est relié fixement à une douille (31) vissée sur un filetage extérieur du tube (2), laquelle douille comprend une surface d'application d'outil (32) sur sa surface d'enveloppe extérieure.

10. Barre d'accouplement pour véhicules automobiles selon l'une quelconque des revendications 5 à 9,
**caractérisée en ce que**
l'adaptateur (7), respectivement la liaison de composants entre le tube (2) et la tige (5), peut être fixé(e) au moyen d'un contre-écrou (11).

11. Barre d'accouplement pour véhicules automobiles selon la revendication 10,
**caractérisée en ce que**
le contre-écrou (11) est autobloquant ou est pourvu d'un élément de blocage.

12. Barre d'accouplement pour véhicules automobiles selon l'une quelconque des revendications 1 à 11,
**caractérisée en ce**
**qu'**une surface d'application d'outil (12) est réalisée sur la surface d'enveloppe extérieure du tube (2).

13. Barre d'accouplement pour véhicules automobiles selon l'une quelconque des revendications 1 à 12,
**caractérisée en ce que**
des marques formant une échelle sont prévues sur la surface d'enveloppe extérieure du tube (2) pour le réglage de la longueur de la barre d'accouplement.

14. Barre d'accouplement pour véhicules automobiles selon l'une quelconque des revendications 1 à 13,
**caractérisée en ce**
**qu'**en vue de limiter le trajet axial de la douille filetée (3), le filetage intérieur (1) du tube (2) présente une longueur définie.

15. Barre d'accouplement pour véhicules automobiles selon l'une quelconque des revendications 1 à 14,
**caractérisée en ce que**
la douille filetée (3) comprend un organe de blocage (13) à travers lequel s'engage la tige (5), lequel organe de blocage est reçu, de manière mobile axialement de façon limitée, dans une rainure (14) présente sur la surface d'enveloppe extérieure de la tige (5) et est inséré dans une rainure (16) ménagée dans la surface d'enveloppe intérieure (15) de la douille filetée (3).

16. Barre d'accouplement pour véhicules automobiles selon la revendication 15,
**caractérisée en ce que**
les rainures (14, 16) sont réalisées de manière périphérique le long de la surface d'enveloppe extérieure de la tige (5), respectivement sur la surface d'enveloppe intérieure (15) de la douille filetée (3).
